# FASCICULE DE BREVET EUROPEEN

(11) **EP 3 525 989 B1**
(45) Date de publication et mention de la délivrance du brevet: **07.06.2023**
(21) Numéro de dépôt: 17780841.7
(22) Date de dépôt: 26.09.2017
(51) Int. Cl.: B25D 9/12, F16C 32/06

(54) **APPAREIL À PERCUSSIONS POURVU D'UN PALIER DE GUIDAGE ÉQUIPÉ D'UN DISPOSITIF DE CENTRAGE**
SCHLAGVORRICHTUNG MIT FÜHRUNGSLAGER MIT ZENTRIERVORRICHTUNG
PERCUSSION APPARATUS PROVIDED WITH A GUIDE BEARING EQUIPPED WITH A CENTRING DEVICE

(30) Priorité: 14.10.2016 FR 1659980
(43) Date de publication de la demande: 21.08.2019
(73) Titulaire: Montabert, 69800 Saint Priest (FR)
(72) Inventeur: COMARMOND, Jean-Sylvain, 69390 Vourles (FR)
(74) Mandataire: Germain Maureau
(86) Numéro de dépôt international: PCT/FR2017/052579
(87) Numéro de publication internationale: WO 2018/069596

(56) Documents cités:
- EP-A1- 0 071 546
- WO-A1-2011/123020
- WO-A1-2014/003626
- WO-A2-2008/095073
- DE-A1-102012 013 409
- FR-A- 998 513

## Description

La présente invention concerne un appareil à percussions pourvu d'un palier de guidage équipé d'un dispositif de centrage.

Le document WO 2008/095073 A2 divulgue un appareil à percussions 10, comportant :
- un corps comprenant un cylindre de piston,
- un piston de frappe monté déplaçable de façon alternative à l'intérieur du cylindre de piston, et agencé pour venir percuter un outil,
- des paliers de guidage comprenant chacun une surface de guidage configurée pour guider le piston de frappe lors des déplacements du piston de frappe dans le cylindre de piston, un jeu fonctionnel étant prévu entre les surfaces de guidage et le piston de frappe,
- un circuit d'alimentation en fluide haute pression et un circuit basse pression,
- deux chambres d'entraînement de piston annulaires formées de manière adjacente à des extrémités avant et arrière d'une partie intermédiaire du piston de frappe, les deux chambres d'entraînement de piston étant configurées pour recevoir un fluide incompressible de manière à commander le mouvement alternatif du piston de frappe, et
- des rainures annulaires prévues dans les surfaces de guidages des paliers de guidage, et destinées à être reliées au circuit basse pression.

Un appareil à percussions, tel qu'un brise-roche hydraulique, comprend de façon connue :
- un corps comprenant un cylindre de piston,
- un piston de frappe monté déplaçable de façon alternative à l'intérieur du cylindre de piston, et agencé pour venir percuter un outil, et
- un ou plusieurs paliers de guidage comprenant chacun une surface de guidage configurée pour guider le piston de frappe lors de ses déplacements dans le cylindre de piston.

Lorsque l'appareil à percussions est équipé d'un piston de frappe de masse élevée, et en particulier lorsque l'appareil à percussions est utilisé en position non verticale, le piston de frappe peut se retrouver en appui contre les surfaces de guidage des paliers de guidage de l'appareil à percussions. De tels appuis occasionnent des frictions intenses entre le piston de frappe et les surfaces de guidage, et sont susceptibles de provoquer un grippage du piston de frappe, conduisant à un blocage de l'appareil à percussions, voire à une avarie définitive de l'appareil à percussions.

Afin de limiter les risques de grippage du piston de frappe, il est connu d'assurer un flux hydraulique entre le piston de frappe et les surfaces de guidage des paliers de guidage. Généralement, ce flux hydraulique est obtenu en imposant un différentiel de pression aux extrémités axiales de chaque surface de guidage, par exemple en reliant un premier côté de chaque surface de guidage à un circuit d'alimentation en fluide haute pression, et un deuxième côté de chaque surface de guidage à un circuit basse pression. Un tel agencement génère un flux hydraulique dans chaque palier de guidage, qui favorise la création d'un film hydraulique entre le piston de frappe et chaque palier de guidage.

Néanmoins, un tel agencement ne permet pas d'assurer un bon centrage du piston de frappe par rapport à ses paliers de guidage, et se révèle souvent inefficace pour des pistons de frappe de masse élevée.

La présente invention vise à remédier à ces inconvénients.

Le problème technique à la base de l'invention consiste donc à fournir un appareil à percussions qui soit de structure simple et économique, tout en évitant tout risque de grippage du piston de frappe et ce quelle que soit sa masse.

A cet effet, la présente invention concerne un appareil à percussions selon la revendication 1, comportant :
- un corps comprenant un cylindre de piston,
- un piston de frappe monté déplaçable de façon alternative à l'intérieur du cylindre de piston, et agencé pour venir percuter un outil,
- au moins un palier de guidage comprenant une surface de guidage configurée pour guider le piston de frappe lors des déplacements du piston de frappe dans le cylindre de piston, un jeu fonctionnel étant prévu entre la surface de guidage et le piston de frappe,
- un circuit d'alimentation en fluide haute pression et un circuit basse pression, tel que l'au moins un palier de guidage comporte un dispositif de centrage configuré pour centrer le piston de frappe dans le cylindre de piston, le dispositif de centrage comprenant :
   - une pluralité de chambres de centrage ménagées dans la surface de guidage de l'au moins un palier de guidage et réparties autour du piston de frappe, chaque chambre de centrage étant reliée fluidiquement au circuit d'alimentation en fluide haute pression, et
   - une pluralité de rainures d'évacuation ménagées dans la surface de guidage de l'au moins un palier de guidage, chaque rainure d'évacuation étant située à proximité d'au moins l'une des chambres de centrage et étant reliée fluidiquement au circuit basse pression, la pluralité de rainures d'évacuation comportant au moins deux rainures d'évacuation qui sont annulaires et qui s'étendent autour du piston de frappe et respectivement de part et d'autre des chambres de centrage.

Une telle configuration de l'appareil à percussion, et notamment du dispositif de centrage, permet de recentrer hydrauliquement et efficacement le piston de frappe, et ainsi éviter que ce dernier entre en contact direct avec son ou ses paliers de guidages, et ce, dès la mise sous pression de l'appareil à percussion, ainsi que pendant chaque cycle de frappe du piston de frappe.

Les modes préférentiels de réalisation de l'appareil à percussions de la présente invention sont définis par les revendications dépendantes.

Selon un mode de réalisation de l'invention, la surface de guidage est annulaire.

Selon un mode de réalisation de l'invention, chaque chambre de centrage est destinée à être alimentée en fluide haute pression, et plus particulièrement chaque chambre de centrage est destinée à être alimentée séparément en fluide haute pression.

Selon un mode de réalisation de l'invention, chaque rainure d'évacuation s'étend au moins en partie le long d'au moins une portion d'au moins l'une des chambres de centrage.

Selon un mode de réalisation de l'invention, chaque rainure d'évacuation est configurée pour communiquer fluidiquement avec au moins l'une des chambres de centrage via le jeu fonctionnel prévu entre la surface de guidage et le piston de frappe.

Selon un mode de réalisation de l'invention, les chambres de centrage sont régulièrement réparties autour du piston de frappe.

Selon un mode de réalisation de l'invention, les chambres de centrage sont distribuées de manière équidistante par rapport à l'axe longitudinal du piston de frappe.

Selon un mode de réalisation de l'invention, chaque chambre de centrage présente une hauteur, prise selon une direction axiale du piston de frappe, inférieure à 30 % de la hauteur du palier de guidage respectif.

Selon un mode de réalisation de l'invention, chaque chambre de centrage s'étend sur un secteur angulaire inférieur à 30°.

Selon un mode de réalisation de l'invention, les chambres de centrage sont alignées sur une même circonférence de la surface de guidage. En d'autre terme, les chambres de centrage sont sensiblement uniformément réparties autour du piston de frappe.

Selon un mode de réalisation de l'invention, le dispositif de centrage est configuré pour alimenter chaque chambre de centrage avec un débit d'alimentation sensiblement constant.

Selon un mode de réalisation de l'invention, le dispositif de centrage comporte une pluralité de canaux de liaison pourvus chacun d'un organe de régulation de débit, chaque canal de liaison reliant fluidiquement le circuit d'alimentation en fluide haute pression à une chambre de centrage respective.

Selon un mode de réalisation de l'invention, chaque organe de régulation de débit est un orifice calibré.

Selon un mode de réalisation de l'invention, le dispositif de centrage comporte une pluralité de canaux d'évacuation, chaque canal d'évacuation reliant fluidiquement le circuit basse pression à une rainure d'évacuation respective.

Selon un mode de réalisation de l'invention, chaque canal d'évacuation débouche dans le fond d'une rainure d'évacuation respective.

Selon un mode de réalisation de l'invention, l'appareil à percussions comprend en outre un distributeur de commande configuré pour commander un mouvement alternatif du piston de frappe à l'intérieur du cylindre de piston alternativement suivant une course de frappe et une course de retour.

Selon un mode de réalisation de l'invention, le piston de frappe et le cylindre de piston délimite une première chambre de commande reliée en permanence au circuit d'alimentation en fluide haute pression et une deuxième chambre de commande, le distributeur de commande étant configuré pour mettre la deuxième chambre de commande en relation alternativement avec le circuit d'alimentation en fluide haute pression et le circuit basse pression. Ainsi, les chambres de centrage et la première chambre de commande sont avantageusement reliées à un même circuit d'alimentation et les rainures d'évacuation et la deuxième chambre de commande sont configurées pour être reliées à un même circuit de retour. Cependant, les chambres de centrage et la première chambre de commande pourraient être reliées à des circuits d'alimentation différents et les rainures d'évacuation et la deuxième chambre de commande pourraient également être configurées pour être reliées à des circuits de retour différents.

Selon un mode de réalisation de l'invention, l'appareil à percussions comporte un canal d'alimentation reliant fluidiquement le circuit d'alimentation en fluide haute pression et la première chambre de commande, chaque canal de liaison débouchant respectivement dans le canal d'alimentation et dans la chambre de centrage respective.

Selon un mode de réalisation de l'invention, chaque orifice calibré débouche dans la chambre de centrage respective, et plus particulièrement dans la surface de fond de la chambre de centrage respective.

Selon un mode de réalisation de l'invention, le circuit d'alimentation en fluide haute pression est un circuit d'alimentation en fluide hydraulique incompressible.

Selon un mode de réalisation de l'invention, l'appareil à percussions comprend au moins deux paliers de guidage décalés axialement l'un par rapport à l'autre, chacun des paliers de guidage comportant un dispositif de centrage configuré pour centrer le piston de frappe dans le cylindre de piston.

Selon un mode de réalisation de l'invention, les deux paliers de guidage sont disposés de part et d'autre de la première chambre de commande.

Selon un mode de réalisation de l'invention, l'un des paliers de guidage est disposé entre les première et deuxième chambres de commande.

Selon un mode de réalisation de l'invention, le jeu fonctionnel prévu entre la surface de guidage et le piston de frappe est de l'ordre de quelques centièmes de millimètre.

Selon un mode de réalisation de l'invention, chaque chambre de centrage présente une forme générale rectangulaire.

De toute façon l'invention sera bien comprise à l'aide de la description qui suit en référence aux dessins schématiques annexés représentant, à titre d'exemple non limitatif, une forme d'exécution de cet appareil à percussions.
Figure 1 est une vue schématique en coupe longitudinale d'un appareil à percussions selon l'invention.
Figure 2 est une vue partielle de la surface de guidage d'un palier de guidage de l'appareil à percussions de la figure 1.
Figure 3 est une vue partielle en coupe selon la ligne III-III de la figure 2.
Figure 4 est une vue en coupe selon la ligne IV-IV de la figure 1.

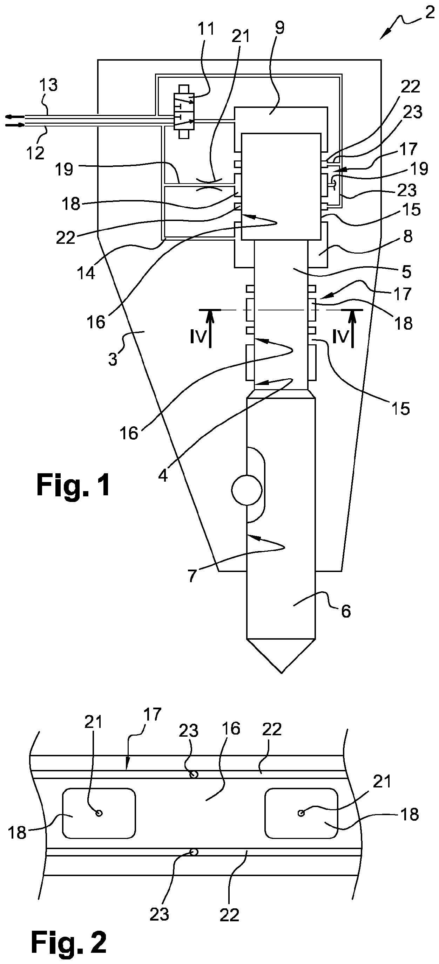

L'appareil à percussions 2, représenté sur les figures 1 à 4 et également appelé brise-roche hydraulique, comprend un corps 3 comportant un cylindre de piston 4, et un piston de frappe 5 étagé monté coulissant de façon alternative à l'intérieur du cylindre de piston 4. Au cours de chaque cycle de fonctionnement de l'appareil à percussions 2, le piston de frappe 5 est destiné à venir frapper contre l'extrémité supérieure d'un outil 6 monté coulissant dans un alésage 7 ménagé dans le corps 3 coaxialement au cylindre de piston 4. Il convient d'être noté que le cylindre de piston 4 peut être directement ménagé dans le corps 3 ou être ménagé dans une pièce rapportée dans le corps 3.

Comme montré sur la figure 1, le piston de frappe 5 et le cylindre de piston 4 délimitent une première chambre de commande 8 annulaire, dite chambre basse, et une deuxième chambre de commande 9, dite chambre haute, de section plus importante disposée au dessus du piston de frappe 5.

L'appareil à percussions 2 comprend en outre un distributeur de commande 11 agencé pour commander un mouvement alternatif du piston de frappe 5 à l'intérieur du cylindre de piston 4 alternativement suivant une course de frappe et une course de retour. Le distributeur de commande 11 est configuré pour mettre la deuxième chambre de commande 9, alternativement en relation avec un circuit d'alimentation en fluide haute pression 12, tel qu'un circuit d'alimentation en fluide hydraulique incompressible, lors de la course de frappe du piston de frappe 5, et avec un circuit basse pression 13 lors de la course de retour du piston de frappe 5.

Le distributeur de commande 11 est plus particulièrement monté mobile dans un alésage ménagé dans le corps 3 entre une première position (voir la figure 1) dans laquelle le distributeur de commande 11 est configuré pour mettre la deuxième chambre de commande 9 en relation avec le circuit d'alimentation en fluide haute pression 12 et une deuxième position dans laquelle le distributeur de commande 11 est configuré pour mettre la deuxième chambre de commande 9 en relation avec le circuit basse pression 13.

La première chambre de commande 8 est alimentée en permanence en fluide haute pression par un canal d'alimentation 14, de manière à ce que chaque position du distributeur de commande 11 provoque la course de frappe du piston de frappe 5, puis la course de retour du piston de frappe 5. Le canal d'alimentation 14 peut avantageusement être relié à un accumulateur (non représenté sur les figures).

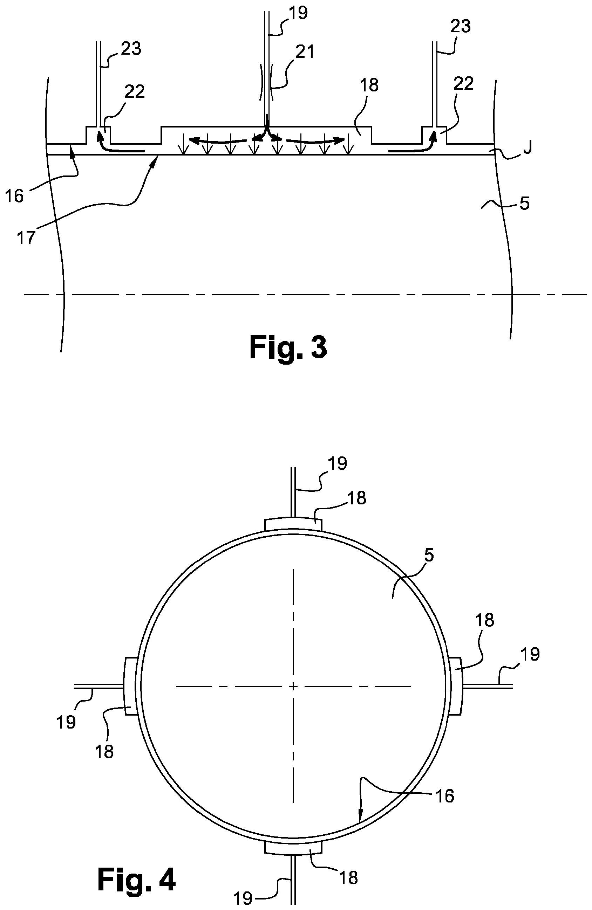

L'appareil à percussions 2 comprend également deux paliers de guidage 15 comprenant chacun une surface de guidage 16, qui est annulaire, configurée pour guider le piston de frappe 5 lors des déplacements du piston de frappe 5 dans le cylindre de piston 4. Comme montré plus particulièrement sur la figure 3, un jeu fonctionnel J, par exemple de quelques centièmes de millimètre, est prévu entre le piston de frappe 5 et chaque surface de guidage 16. Selon le mode de réalisation représenté sur les figures, les deux paliers de guidage 15 sont décalés axialement l'un par rapport à l'autre, et sont disposés de part et d'autre de la première chambre de commande 8.

Chaque palier de guidage 15 comporte avantageusement un dispositif de centrage 17 configuré pour centrer le piston de frappe 5 dans le cylindre de piston 4.

Chaque dispositif de centrage 15 comprend notamment une pluralité de chambres de centrage 18, par exemple quatre chambres de centrage 18, ménagées dans la surface de guidage 16 du palier de guidage 15 respectif et régulièrement réparties autour du piston de frappe 5. Selon le mode de réalisation représenté sur les figures, les chambres de centrage 18 de chaque dispositif de centrage 17 sont distribuées de manière équidistante par rapport à l'axe longitudinal du piston de frappe 5, et sont alignées sur une même circonférence de la surface de guidage 16 respective.

Selon un mode de réalisation de l'invention, chaque chambre de centrage 18 présente une hauteur, prise selon une direction axiale du piston de frappe 5, inférieure à 30 % de la hauteur du palier de guidage respectif 15, et s'étend sur un secteur angulaire inférieur à 30°. Chaque chambre de centrage 18 peut par exemple présenter une forme générale rectangulaire ou encore toute autre forme différente.

Chaque chambre de centrage 18 est reliée fluidiquement au circuit d'alimentation en fluide haute pression 12, et est destinée à être alimentée séparément en fluide haute pression. Selon le mode de réalisation représenté sur les figures, chaque dispositif de centrage 17 comporte une pluralité de canaux de liaison 19 reliant fluidiquement chacun le circuit d'alimentation en fluide haute pression 12 à une chambre de centrage respective 18, et chaque canal de liaison 19 est pourvu d'un organe de régulation de débit 21, tel qu'un orifice calibré, et est ainsi configuré pour alimenter la chambre de centrage respective 18 avec un débit d'alimentation sensiblement constant. Avantageusement, chaque canal de liaison 19 comporte une première extrémité débouchant dans le canal d'alimentation 14 et une deuxième extrémité débouchant dans la surface de fond de la chambre de centrage respective 18.

Chaque dispositif de centrage 15 comprend également une pluralité de rainures d'évacuation 22 ménagées dans la surface de guidage respective 16. Selon le mode de réalisation représenté sur les figures, chaque dispositif de centrage 15 comprend deux rainures d'évacuation 22 qui sont annulaires et qui s'étendent autour du piston de frappe 5 et respectivement de part et d'autre des chambres de centrage respectives 18. Avantageusement, chaque rainure d'évacuation s'étend à proximité d'au moins une portion de chacune des chambres de centrage 18 du dispositif de centrage 15 respectif, et est configurée pour communiquer fluidiquement avec chacune des chambres de centrage 18 du dispositif de centrage 15 respectif via le jeu fonctionnel prévu entre la surface de guidage respective 16 et le piston de frappe 5.

Chaque rainure d'évacuation 22 est reliée fluidiquement au circuit basse pression 13. Selon le mode de réalisation représenté sur les figures, chaque dispositif de centrage 15 comprend une pluralité de canaux d'évacuation 23 reliant fluidiquement chacun le circuit basse pression 13 à une rainure d'évacuation respective 22. Avantageusement, chaque canal d'évacuation 23 débouche dans le fond de la rainure d'évacuation respective 22.

Lorsque l'appareil à percussions 2 fonctionne, chaque chambre de centrage 18 est alimentée en fluide à haute pression par l'intermédiaire du canal de liaison respectif 19, et le débit de fluide injecté dans chaque chambre de centrage 18 est sensiblement constant du fait de la présence d'un organe de régulation de débit 21 sur chaque canal de liaison 19. Comme montré plus particulièrement sur la figure 3, le fluide à haute pression injecté dans chaque chambre de centrage 18 s'écoule à l'extérieur de la chambre de centrage respective 18 via le jeu fonctionnel J entre le piston de frappe 5 et la surface de guidage respective 16, pénètre ensuite dans les rainures d'évacuation 22 et s'écoule en direction du circuit basse pression 13 via les canaux d'évacuation 23.

Etant donné que le débit de fluide injecté dans chaque chambre de centrage 18 est sensiblement constant, si le jeu fonctionnel J au niveau d'une chambre de centrage 18 diminue, du fait d'un déplacement latéral du piston de frappe 5, alors le passage pour l'écoulement du fluide haute pression à l'extérieur de ladite chambre de centrage 18 diminuera et la pression régnant dans ladite chambre de centrage 18 augmentera, et inversement, si le jeu fonctionnel J au niveau d'une chambre de centrage 18 augmente, également du fait d'un déplacement latéral du piston de frappe 5, alors le passage pour l'écoulement du fluide haute pression à l'extérieur de ladite chambre de centrage 18 augmentera et la pression régnant dans ladite chambre de centrage 18 diminuera.

Ainsi, la force de poussée exercée par chaque chambre de centrage 18 sur le piston de frappe 5 dépend de la valeur du jeu fonctionnel J au niveau de cette chambre de centrage 18, et sera d'autant plus élevée que la valeur du jeu fonctionnel J au niveau de cette chambre de centrage 18 sera faible. En particulier, lorsque la valeur du jeu fonctionnel J au niveau d'une chambre de centrage 18 diminue, alors la chambre de centrage 18 a tendance à repousser le piston de frappe 5.

Il est évident que tout désalignement entre l'axe du piston de frappe 5 et l'axe d'un palier de guidage 15 a pour effet de réduire le jeu fonctionnel J d'un côté du piston de frappe 5 et de l'augmenter de l'autre côté du piston de frappe 5. De ce fait, en cas d'un tel désalignement du piston de frappe 5, les chambres de centrage 18 situées du côté de la diminution du jeu fonctionnel J fourniront, sur le piston de frappe 5, une force de poussée radiale accrue tandis que les chambres de centrage 18 situées du côté de l'augmentation du jeu fonctionnel J fourniront une force de poussée radiale réduite. Ces dispositions ont pour conséquence de recentrer en permanence le piston de frappe 5 par rapport aux paliers de guidage 15, et donc d'éviter tout grippage du piston de frappe 5.

Chaque dispositif de centrage pourrait comporter plus ou moins de quatre chambres de centrage 18.

## Revendications

1. Appareil à percussions (2), comportant :
- un corps (3) comprenant un cylindre de piston (4),
- un piston de frappe (5) monté déplaçable de façon alternative à l'intérieur du cylindre de piston (4), et agencé pour venir percuter un outil (6),
- au moins un palier de guidage (15) comprenant une surface de guidage (16) configurée pour guider le piston de frappe (5) lors des déplacements du piston de frappe (5) dans le cylindre de piston (4), un jeu fonctionnel (J) étant prévu entre la surface de guidage (16) et le piston de frappe (5),
- un circuit d'alimentation en fluide haute pression (12) et un circuit basse pression (13), tel que l'au moins un palier de guidage (15) comporte un dispositif de centrage (17) configuré pour centrer le piston de frappe (5) dans le cylindre de piston (4), le dispositif de centrage (17) comprenant :
- une pluralité de chambres de centrage (18) ménagées dans la surface de guidage (16) de l'au moins un palier de guidage (15) et réparties autour du piston de frappe (5), chaque chambre de centrage (18) étant reliée fluidiquement au circuit d'alimentation en fluide haute pression (12), et
- une pluralité de rainures d'évacuation (22) ménagées dans la surface de guidage (16) de l'au moins un palier de guidage (15), chaque rainure d'évacuation (22) étant située à proximité d'au moins l'une des chambres de centrage (18) et étant reliée fluidiquement au circuit basse pression (13), la pluralité de rainures d'évacuation (22) comportant au moins deux rainures d'évacuation (22) qui sont annulaires et qui s'étendent autour du piston de frappe (5) et respectivement de part et d'autre des chambres de centrage (18).

2. Appareil à percussions (2) selon la revendication 1, dans lequel les chambres de centrage (18) sont régulièrement réparties autour du piston de frappe (5).

3. Appareil à percussions (2) selon la revendication 1 ou 2, dans lequel les chambres de centrage (18) sont alignées sur une même circonférence de la surface de guidage (16).

4. Appareil à percussions (2) selon l'une quelconque des revendications 1 à 3, dans lequel le dispositif de centrage (17) est configuré pour alimenter chaque chambre de centrage (18) avec un débit d'alimentation sensiblement constant.

5. Appareil à percussions (2) selon l'une quelconque des revendications 1 à 4, dans lequel le dispositif de centrage (17) comporte une pluralité de canaux de liaison (19) pourvus chacun d'un organe de régulation de débit (21), chaque canal de liaison (19) reliant fluidiquement le circuit d'alimentation en fluide haute pression (12) à une chambre de centrage (18) respective.

6. Appareil à percussions (2) selon la revendication 5, dans lequel chaque organe de régulation de débit (21) est un orifice calibré.

7. Appareil à percussions (2) selon l'une quelconque des revendications 1 à 6, dans lequel le dispositif de centrage (17) comporte une pluralité de canaux d'évacuation (23), chaque canal d'évacuation (23) reliant fluidiquement le circuit basse pression (13) à une rainure d'évacuation (22) respective.

8. Appareil à percussions (2) selon l'une quelconque des revendications 1 à 7, lequel comprend en outre un distributeur de commande (11) configuré pour commander un mouvement alternatif du piston de frappe (5) à l'intérieur du cylindre de piston (4) alternativement suivant une course de frappe et une course de retour.

9. Appareil à percussions (2) selon la revendication 8, dans lequel le piston de frappe (5) et le cylindre de piston (4) délimite une première chambre de commande (8) reliée en permanence au circuit d'alimentation en fluide haute pression (12) et une deuxième chambre de commande (9), le distributeur de commande (11) étant configuré pour mettre la deuxième chambre de commande (9) en relation alternativement avec le circuit d'alimentation en fluide haute pression (12) et le circuit basse pression (13).

10. Appareil à percussions (2) selon l'une quelconque des revendications 1 à 9, lequel comprend au moins deux paliers de guidage (15) décalés axialement l'un par rapport à l'autre, chacun des paliers de guidage (15) comportant un dispositif de centrage (17) configuré pour centrer le piston de frappe (5) dans le cylindre de piston (4).

## Patentansprüche

1. Schlaggerät (2), umfassend:
- einen Körper (3), der einen Kolbenzylinder (4) aufweist,
- einen Schlagkolben (5), der hin und her beweglich im Inneren des Kolbenzylinders (4) gelagert und angeordnet ist, um auf ein Werkzeug (6) aufzuschlagen,
- mindestens ein Führungslager (15), das eine Führungsfläche (16) aufweist, die konfiguriert ist, um den Schlagkolben (5) während der Bewegungen des Schlagkolbens (5) im Kolbenzylinder (4) zu führen, wobei zwischen der Führungsfläche (16) und dem Schlagkolben (5) ein funktionelles Spiel (J) vorgesehen ist,
- einen Hochdruck-Fluidversorgungskreislauf (12) und einen Niederdruckkreislauf (13), wobei das mindestens eine Führungslager (15) eine Zentriervorrichtung (17) umfasst, die konfiguriert ist, um den Schlagkolben (5) im Kolbenzylinder (4) zu zentrieren, wobei die Zentriervorrichtung (17) Folgendes aufweist:
- eine Vielzahl von Zentrierkammern (18), die in der Führungsfläche (16) des mindestens einen Führungslagers (15) ausgebildet und um den Schlagkolben (5) herum verteilt sind, wobei jede Zentrierkammer (18) mit dem Hochdruck-Fluidversorgungskreislauf (12) fluidisch verbunden ist, und
- eine Vielzahl von Auslassnuten (22), die in der Führungsfläche (16) des mindestens einen Führungslagers (15) ausgebildet sind, wobei jede Auslassnut (22) sich in der Nähe von mindestens einer der Zentrierkammern (18) befindet und mit dem Niederdruckkreislauf (13) fluidisch verbunden ist, wobei die Vielzahl von Auslassnuten (22) mindestens zwei Auslassnuten (22) umfasst, die ringförmig sind und die sich um den Schlagkolben (5) herum und jeweils auf beiden Seiten der Zentrierkammern (18) erstrecken.

2. Schlaggerät (2) nach Anspruch 1, wobei die Zentrierkammern (18) gleichmäßig um den Schlagkolben (5) herum verteilt sind.

3. Schlaggerät (2) nach Anspruch 1 oder 2, wobei die Zentrierkammern (18) auf einem gleichen Umfang der Führungsfläche (16) ausgerichtet sind.

4. Schlaggerät (2) nach einem der Ansprüche 1 bis 3, wobei die Zentriervorrichtung (17) konfiguriert ist, jede Zentrierkammer (18) mit einer im Wesentlichen konstanten Zufuhrrate zu versorgen.

5. Schlaggerät (2) nach einem der Ansprüche 1 bis 4, wobei die Zentriervorrichtung (17) eine Vielzahl von Verbindungskanälen (19) umfasst, die jeweils mit einem Durchflussregelorgan (21) versehen sind, wobei jeder Verbindungskanal (19) den Hochdruck-Fluidversorgungskreislauf (12) fluidisch mit einer jeweiligen Zentrierkammer (18) verbindet.

6. Schlaggerät (2) nach Anspruch 5, wobei jedes Durchflussregelorgan (21) eine kalibrierte Öffnung ist.

7. Schlaggerät (2) nach einem der Ansprüche 1 bis 6, wobei die Zentriervorrichtung (17) eine Vielzahl von Auslasskanälen (23) umfasst, wobei jeder Auslasskanal (23) den Niederdruckkreislauf (13) fluidisch mit einer jeweiligen Auslassnut (22) verbindet.

8. Schlaggerät (2) nach einem der Ansprüche 1 bis 7, das ferner einen Steuerverteiler (11) aufweist, der konfiguriert ist, eine Hin- und Herbewegung des Schlagkolbens (5) im Inneren des Kolbenzylinders (4) abwechselnd gemäß einem Schlaghub und einem Rückhub zu steuern.

9. Schlaggerät (2) nach Anspruch 8, wobei der Schlagkolben (5) und der Kolbenzylinder (4) eine erste Steuerkammer (8), die permanent mit dem Hochdruck-Fluidversorgungskreislauf (12) verbunden ist, und eine zweite Steuerkammer (9) begrenzen, wobei der Steuerverteiler (11) konfiguriert ist, die zweite Steuerkammer (9) abwechselnd mit dem Hochdruck-Fluidversorgungskreislauf (12) und dem Niederdruckkreislauf (13) in Verbindung zu bringen.

10. Schlaggerät (2) nach einem der Ansprüche 1 bis 9, das mindestens zwei axial zueinander versetzte Führungslager (15) aufweist, wobei jedes der Führungslager (15) eine Zentriervorrichtung (17) umfasst, die konfiguriert ist, den Schlagkolben (5) im Kolbenzylinder (4) zu zentrieren.

## Claims

1. A percussion apparatus (2), including:
- a body (3) comprising a piston cylinder (4),
- a striking piston (5) mounted so as to be displaced alternately inside the piston cylinder (4), and arranged to strike a tool (6),
- at least one guide bearing (15) comprising a guide surface (16) configured to guide the striking piston (5) during displacements of the striking piston (5) in the piston cylinder (4), a functional clearance (J) being provided between the guide surface (16) and the striking piston (5),
- a high pressure fluid supply circuit (12) and a low pressure circuit (13),
wherein the at least one guide bearing (15) includes a centering device (17) configured to center the striking piston (5) in the piston cylinder (4), the centering device (17) comprising:
- a plurality of centering chambers (18) formed in the guide surface (16) of the at least one guide bearing (15) and distributed around the striking piston (5), each centering chamber (18) being fluidly connected to the high pressure fluid supply circuit (12), and
- a plurality of discharge grooves (22) formed in the guide surface (16) of the at least one guide bearing (15), each discharge groove (22) being located proximate to at least one of the centering chambers (18) and being fluidly connected to the low pressure circuit (13), the plurality of discharge grooves (22) including at least two discharge grooves (22) which are annular and which extend around the striking piston (5) and respectively on either side of the centering chambers (18).

2. The percussion apparatus (2) according to claim 1, wherein the centering chambers (18) are evenly distributed around the striking piston (5).

3. The percussion apparatus (2) according to claim 1 or 2, wherein the centering chambers (18) are aligned on a same circumference of the guide surface (16).

4. The percussion apparatus (2) according to any one of claims 1 to 3, wherein the centering device (17) is configured to supply each centering chamber (18) with a substantially constant supply flow rate.

5. The percussion apparatus (2) according to any one of claims 1 to 4, wherein the centering device (17) includes a plurality of connection channels (19) each provided with a flow rate control member (21), each connection channel (19) fluidly connecting the high pressure fluid supply circuit (12) to a respective centering chamber (18).

6. The percussion apparatus (2) according to claim 5, wherein each flow rate control member (21) is a calibrated orifice.

7. The percussion apparatus (2) according to any one of claims 1 to 6, wherein the centering device (17) includes a plurality of discharge channels (23), each discharge channel (23) fluidly connecting the low pressure circuit (13) to a respective discharge groove (22).

8. The percussion apparatus (2) according to any one of claims 1 to 7, which further comprises a control distributor (11) configured to control an alternating movement of the striking piston (5) inside the piston cylinder (4) alternately following a strike stroke and a return stroke.

9. The percussion apparatus (2) according to claim 8, wherein the striking piston (5) and the piston cylinder (4) delimit a first control chamber (8) permanently connected to the high pressure fluid supply circuit (12) and a second control chamber (9), the control distributor (11) being configured to alternately put the second control chamber (9) in connection with the high pressure fluid supply circuit (12) and the low pressure circuit (13).

10. The percussion apparatus (2) according to any one of claims 1 to 9, which comprises at least two guide bearings (15) axially offset with respect to one another, each of the guide bearings (15) including a centering device (17) configured to center the striking piston (5) in the piston cylinder (4).
